# EUROPEAN PATENT APPLICATION

(11) **EP 4 643 624 A1**
(43) Date of publication of application: **05.11.2025**
(21) Application number: 23911887.0
(22) Date of filing: 20.12.2023
(51) Int. Cl.: A01B 69/00, G05D 1/00

(54) **ROUTE GENERATION DEVICE AND COMPUTER PROGRAM**

(30) Priority: 26.12.2022 JP 2022208229
(71) Applicant: Kubota Corporation, Osaka 556-8601 (JP)
(72) Inventor: TAMATANI, Kenji, Sakai-shi, Osaka 590-0908 (JP)
(74) Representative: Cabinet Beau de Loménie
(86) International application number: PCT/JP2023/045692
(87) International publication number: WO 2024/143107

(57) **Abstract**

A route generation device 80 generates a route on which a work vehicle 10 travels in a work field by self-driving. The route generation device 80 includes an acquisition processor configured to acquire information on a basic shape of a target area 7 in which the work vehicle 10 is to perform work in the work field, and a generation processor configured to generate a work route R on which the work vehicle 10 travels and works in the target area 7 by self-driving. The generation processor sets a work start point Ps of the work route R closer to a passing place that is close to a boundary of the work field and through which the work vehicle 10 passes when moving from the work field toward a road than a work end point Pe of the work route R.

## Description

### TECHNICAL FIELD

The present invention relates to a route generation device and a computer program. The present application claims priority based on Japanese Patent Application No. 2022-208229 filed on December 26, 2022, the entire contents of which are incorporated herein by reference.

### BACKGROUND ART

A work vehicle that works while traveling by self-driving has been proposed (see, for example, PATENT LITERATURE 1). For self-driving, a travel route to be a travel target is generated by a computer.

### CITATION LIST

### [PATENT LITERATURE]

PATENT LITERATURE 1: Japanese Laid-Open Patent Publication No. 2016-31649

### SUMMARY OF THE INVENTION

A route generation device according to one aspect of the present disclosure is a route generation device that generates a route on which a work vehicle travels in a work field by self-driving, including: an acquisition processor configured to acquire information on a basic shape of a target area in which the work vehicle is to perform work in the work field; and a generation processor configured to generate a work route on which the work vehicle travels and works in the target area by self-driving, in which the generation processor sets a work start point of the work route closer to a passing place that is close to a boundary of the work field and through which the work vehicle passes when moving from the work field toward a road than a work end point of the work route.

### BRIEF DESCRIPTION OF DRAWINGS

FIG. 1 is a side view illustrating an embodiment of a work vehicle including a route generation device of the present disclosure.
FIG. 2 is a block diagram illustrating a system configuration.
FIG. 3 is a perspective view illustrating an example of an operational terminal and an operation switch group.
FIG. 4 is a flowchart for describing route generation processing.
FIG. 5 is an explanatory diagram illustrating an example of a work field.
FIG. 6 is an explanatory diagram illustrating an example of a generated work route.
FIG. 7 is an explanatory diagram illustrating an example of a generated work route as a second example.
FIG. 8 is a flowchart for describing route generation processing in the second example.
FIG. 9 is an explanatory diagram illustrating an example of a work field in the second example.
FIG. 10 is a flowchart illustrating an example of control for self-driving.
FIG. 11 is an explanatory diagram of the work vehicle traveling by self-driving.
FIG. 12 is an explanatory diagram of a conventionally generated work route.

### DETAILED DESCRIPTION

### <Problems to be Solved by Present Disclosure>

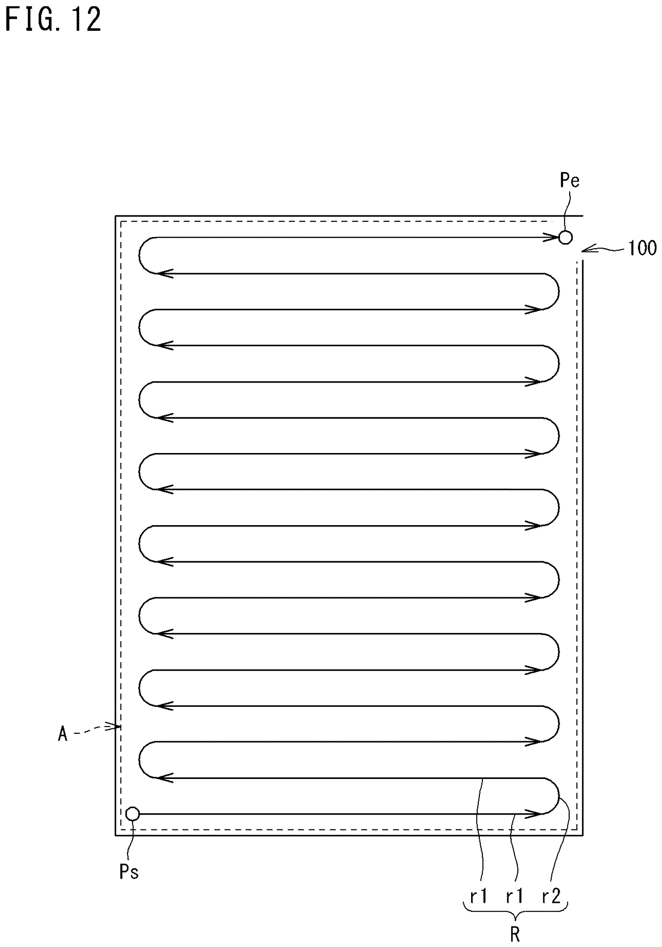

FIG. 12 is an explanatory diagram of a conventionally generated work route. For example, in a work field such as a farm field, a target area A where a work vehicle is to work is set in advance. A work route R when the work vehicle works in the target area A is generated. The work route R includes a plurality of straight routes r1 and turning routes r2 each connecting two of the straight routes r1. Conventionally, a work end point Pe of the work route R is set close to an entrance 100 of the work field. This is because the work vehicle that has finished the work and arrived at the work end point Pe exits to the outside of the work field through the entrance 100 without damaging a field where the work has been completed.

Here, for example, when the work by the work vehicle is work of cultivating a farm field (work field), the tilling depth is set before the work. In order to confirm that the tilling depth according to the set value is achieved, it is necessary for the work vehicle to actually travel and work in the farm field.

Conventionally, the work end point Pe of the work route R is set close to the entrance 100, and thus a work start point Ps of the work route R is located away from the entrance 100. In the case of manual driving in which a driver gets on the work vehicle, the driver starts driving from the work start point Ps, stops the vehicle primarily, gets off the vehicle, and then can visually confirm the work content (tilling depth). However, in the case of self-driving in which a driver does not get on the work vehicle, in order to visually confirm the work content, it is necessary for the manager to go to a position on the work start point Ps side away from the entrance 100, so that the work efficiency may decrease.

In some work fields, the entrance may not be clearly set. Even in such a case, there is often a manager in a place through which the work vehicle passes (passing place) when the work vehicle moves between the road and the work field. Conventionally, the work end point of the work route is set close to the passing place, and the position away from the passing place is set as the work start point of the work route. Also in this case, in the case of self-driving, the manager needs to go to a position on the work start point side that is far away, in order to visually confirm the work content.

Therefore, the present disclosure provides a route generation device that generates a route on which a work vehicle travels by self-driving, the route generation device generating a route that enables improvement in work efficiency, and a computer program for causing a computer to operate as such a route generation device.

### <Effects of the Present Disclosure>

According to the work route generated using the route generation device and the computer program of the present disclosure, the manager can visually confirm the content of the work started by the work vehicle easily, and the work efficiency can be improved.

### <Outline of Embodiment of Present Disclosure>

Hereinafter, outlines of an embodiment of the present disclosure will be listed and described.
(1) A route generation device according to the present embodiment is a device that generates a route on which a work vehicle travels in a work field by self-driving, including: an acquisition processor configured to acquire information on a basic shape of a target area in which the work vehicle is to perform work in the work field; and a generation processor configured to generate a work route on which the work vehicle travels and works in the target area by self-driving, in which the generation processor sets a work start point of the work route closer to a passing place that is close to a boundary of the work field and through which the work vehicle passes when moving from the work field toward a road than a work end point of the work route.

When the work vehicle travels and works in the work field by self-driving, a manager is often present close to the boundary of the work field and close to the passing place through which the work vehicle passes when moving from the work field toward the road. According to the route generation device, the work start point of the work route is set close to the passing place. Therefore, the manager can visually confirm the content of the work started by the work vehicle easily. If the manager determines that the content of the work is insufficient, the manager can quickly take action such as redoing the work.

(2) It is preferable that in a case where the target area acquired by the acquisition processor include an entrance that connects the work field and the road and through which the work vehicle passes, the generation processor set the work start point of the work route at a position close to the entrance.

The manager is often present close to the entrance as the passing place. According to the route generation device, the work start point of the work route for work is set at a position close to the entrance. Therefore, the manager can visually confirm the content of the work started by the work vehicle easily.

(3) A route generation device according to the present embodiment is a device that generates a route on which a work vehicle travels in a work field by self-driving, including: an acquisition processor configured to acquire information on a basic shape of a target area in which the work vehicle is to perform work in the work field; an input unit to which information indicating a manager position of work is input; and a generation processor configured to generate a work route on which the work vehicle travels and works in the target area by self-driving, in which the generation processor sets a work start point of the work route closer to the manager position than a work end point of the work route.

According to the route generation device, the work start point of the work route for work is set close to the manager position. Therefore, the manager can visually confirm the content of the work started by the work vehicle easily. If the manager determines that the content of the work is insufficient, the manager can quickly take action such as redoing the work.

(4) It is preferable that the generation processor set the work end point of the work route for the work vehicle to work at a position away from the work start point of the target area.

For example, when the basic shape of the target area is a rectangle, the work end point may be set at a position diagonally opposite the work start point.

(5) It is preferable that the route generation device according to (1) further include a position confirmation unit configured to confirm that the work vehicle is at the passing place by collating map information of the work field with position information of the work vehicle obtained by a GNSS, and when it is confirmed that the work vehicle is at the passing place, processing of generating a route on which the work vehicle travels in the work field by self-driving be started.

According to this configuration, when the work vehicle arrives at the passing place, generation of a work route having a position close to the passing place set as a work start point is started.

(6) It is preferable that in the route generation device according to any one of (1) to (5), the generation processor set, as a primary stop position, a position on the work route to which the work vehicle travels a short distance from the work start point.

According to this configuration, the work vehicle starts traveling from the work start point of the work route and travels a short distance, and then the work vehicle stops primarily. The manager can visually confirm the content of the work having been performed by the work vehicle during travelling the short distance.

(7) It is preferable that in the route generation device according to (1), the generation processor generate a return route including a route for causing the work vehicle to travel from the work end point to a position close to the passing place, the route being for causing the work vehicle to travel along a ridge of the work field from the work end point.

According to this configuration, a return route for causing the work vehicle to return from the work end point to the vicinity of the passing place is generated.

(8) A computer program according to the present embodiment is a computer program for causing a computer to operate as a device for generating a route on which a work vehicle travels in a work field by self-driving, the computer program causing the computer to: acquire information on a basic shape of a target area in which the work vehicle is to perform work in the work field; and generate a work route on which the work vehicle travels and works in the target area by self-driving, in which in the generating, a work start point of the work route is set closer to a passing place that is close to a boundary of the work field and through which the work vehicle passes when moving from the work field toward a road than a work end point of the work route.

When the work vehicle travels and works in the work field by self-driving, a manager is often present close to the boundary of the work field and close to the passing place through which the work vehicle passes when moving from the work field toward the road. According to the above-described computer program for route generation, the work start point of the work route for work is set close to the passing place. Therefore, the manager can visually confirm the content of the work started by the work vehicle easily. If the manager determines that the content of the work is insufficient, the manager can quickly take action such as redoing the work.

(9) A computer program according to the present embodiment is a computer program for causing a computer to operate as a device for generating a route on which a work vehicle travels in a work field by self-driving, the computer program causing the computer to: acquire information on a basic shape of a target area in which the work vehicle is to perform work in the work field; receive information indicating a manager position of work as input; and generate a work route on which the work vehicle travels and works in the target area by self-driving, in which in the generating, a work start point of the work route is set closer to the manager position than a work end point of the work route.

According to the above-described computer program for route generation, the work start point of the work route for work is set close to the manager position. Therefore, the manager can visually confirm the content of the work started by the work vehicle easily. If the manager determines that the content of the work is insufficient, the manager can quickly take action such as redoing the work.

### <Details of Embodiment of Present Disclosure>

Hereinafter, the embodiment of the present disclosure will be described in detail with reference to the drawings. Note that at least some of the embodiments described below may be arbitrarily combined.

### [Route Generation Device]

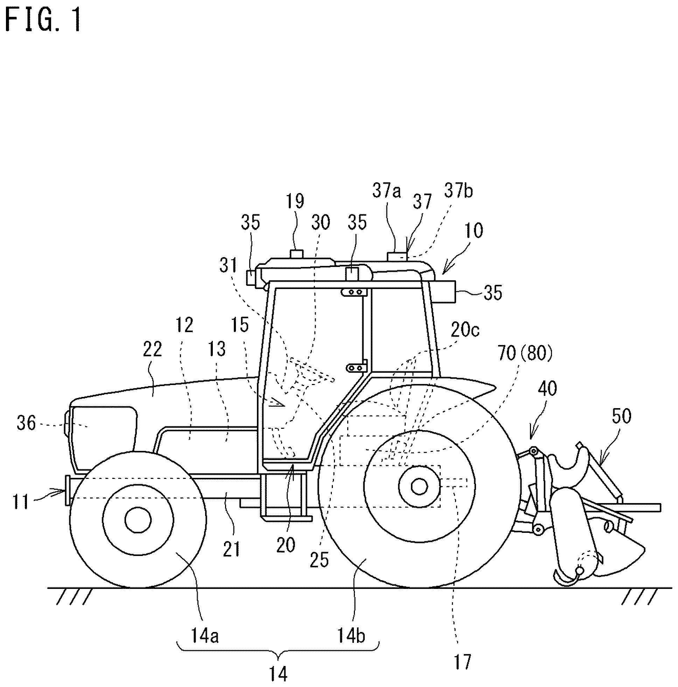

FIG. 1 is a side view illustrating an embodiment of an agricultural machine including a route generation device of the present disclosure. A route generation device of the present disclosure is a device that generates a travel route to be a travel target on which an agricultural machine travels in a work field by self-driving.

The travel route includes a work route for the agricultural machine to work in a work field, and a return route on which the agricultural machine that has finished working in the work field returns to, for example, a work start position. The return route may be generated separately from the work route, or is not necessarily generated.

Agricultural machines are machines used for agricultural use. Examples of agricultural machines include tractors, harvesters, rice transplanters, vehicle for crop management, vegetable transplanters, mowers, seeders, spreaders, and mobile robots for agriculture. A work vehicle, such as a tractor, may function as an "agricultural machine" alone, but a combination of a work vehicle and an implement that is attached thereto may function as an "agricultural machine".

The agricultural machine illustrated in FIG. 1 is a tractor, and is a work vehicle 10 that performs agricultural work. FIG. 1 illustrates the work vehicle 10 to which an implement 50 is connected.

The technique of the present disclosure is applicable not only to a tractor but also to other types of agricultural machines.

Hereinafter, the agricultural machine will be described as the work vehicle 10. The work vehicle 10 includes a controller 70, and the controller 70 has a function of a route generation device 80.

The work vehicle 10 functions in both a manual driving mode, in which the work vehicle 10 is operated by a driver, and a self-driving mode, in which the work vehicle 10 performs unmanned driving. The work vehicle 10 can perform self-driving and manual driving both inside the farm field and on a road (farm road) outside the farm field.

The manual driving is driving in which an operation (including traveling) of the work vehicle 10 is performed by a manual operation by a driver seated on a driver's seat 20 included in the work vehicle 10.

The self-driving is driving for operation (including traveling) of the work vehicle 10 performed by the function of the controller 70 of the work vehicle 10 without the manual operation by a driver.

The self-driving may be performed not only in an unmanned state where a driver is not seated on the driver's seat 20 but also in a manned state where a driver is seated on the driver's seat 20.

The self-driving is realized by a function of the controller 70 (a control unit 73 for driving control to be described later). The controller 70 can control at least one of steering, adjustment of a moving speed, and start and stop of movement necessary for movement of the work vehicle 10.

In the case of self-driving, in addition to the traveling control of the work vehicle 10, the operation control of the implement 50 is also performed without being operated by a driver. That is, while the work vehicle 10 automatically travels, the work is automatically performed by the implement 50.

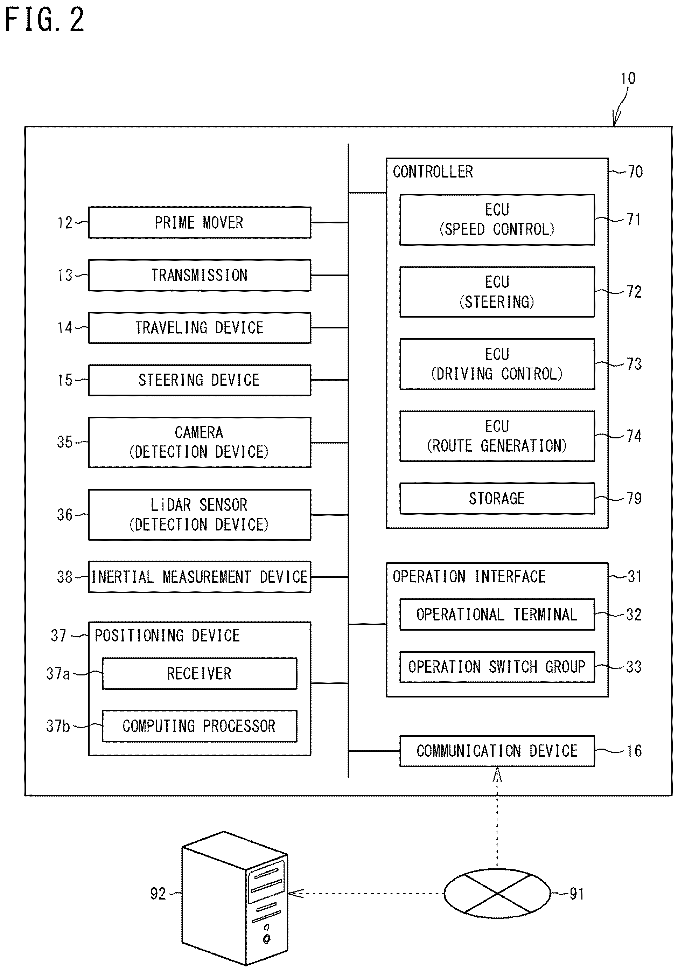

As will be described later, the work vehicle 10 includes a positioning device 37 including a GNSS receiver. The controller 70 (the control unit 73 for driving control) causes the work vehicle 10 to automatically travel based on the position of the work vehicle 10 identified by the positioning device 37 and a travel route (target route) stored in a storage 79 (see FIG. 2).

The work vehicle 10 can also be driven by a remote operation by a person other than a driver seated on the driver's seat 20. For this purpose, the work vehicle 10 includes a communication device 16 (see FIG. 2). The work vehicle 10 is remotely operated by using wireless communication between the work vehicle 10 and a computer in the management office (a management server 92 illustrated in FIG. 2). Note that, during the remote control, on the driver's seat 20, no person may be seated or a person may be seated. The remote operation may be prioritized over the manual operation.

The work vehicle 10 includes a vehicle body 11, a prime mover 12, a transmission 13, a traveling device 14, a steering device 15, a linkage device 40, and the controller 70.

The vehicle body 11 includes a chassis 21 serving as a frame of the vehicle, a body 22 serving as an exterior, and the driver's seat 20. The driver's seat 20 is provided with a steering wheel 30 operated by a driver, and an operation unit (operation interface) 31 including an operation terminal and an operation switch group operated by a driver.

The prime mover 12 is an engine or a motor, and is a diesel engine in the present embodiment.

The traveling device 14 includes front wheels 14a and rear wheels 14b as wheels. The rotational force of the prime mover 12 is shifted by the transmission 13, and the rotational force is transmitted to the wheels, so that the work vehicle 10 travels. In a case where the work vehicle 10 travels in a farm field to perform work, the traveling device 14 may include crawlers as one or both of the front wheels and the rear wheels.

The steering device 15 includes a steering shaft 25 rotated by the steering wheel 30. The steering device 15 changes the rolling direction of the wheels (front wheels 14a) to change the traveling direction of the work vehicle 10. The steering device 15 includes an assist mechanism (power steering device). The assist mechanism assists the operation force of the steering wheel 30 by the driver by hydraulic pressure or electric power. In the case of self-driving, steering is performed by the assist mechanism, and the traveling direction is changed.

The transmission 13 includes a plurality of gears and the like. The transmission 13 changes the propulsion and the moving speed of the work vehicle 10. The transmission 13 can also switch between forward travel and rearward travel of the work vehicle 10.

The work vehicle 10 includes a power take-off mechanism (hereinafter, referred to as a "PTO mechanism"). In the present embodiment, the transmission 13 includes a PTO mechanism. The PTO mechanism includes a PTO shaft 17 as one of output shafts of the transmission 13. The motive power of the prime mover 12 rotates the PTO shaft 17. Various driving units included in the implement 50 are operated by the rotational force of the PTO shaft 17. The PTO shaft 17 serves as an output shaft for operating the implement 50.

The linkage device 40 links the implement 50 to the vehicle body 11. The linkage device 40 is mounted on a rear part of the vehicle body 11 (chassis 21). The linkage device 40 includes a lifting link mechanism that supports the implement 50 so as to be movable up and down. The lifting link mechanism is configured by, for example, a three-point link mechanism. The implement 50 is detachable from the work vehicle 10 by the linkage device 40. The lifting link mechanism changes a height position of the implement 50 or changes the posture of the implement 50 by an actuator such as a hydraulic device.

The implement 50 illustrated in FIG. 1 is a rotary tiller. The implement 50 is not limited to a rotary tiller, and may be, for example, a seeder, a spreader, a transplanter, a mower, a rake, a baler, a harvester, or the like. The linkage device 40 connects the desired implement 50 to the work vehicle 10. The work vehicle 10 causes the implement 50 to perform predetermined work while pulling the implement 50. The linkage device 40 may be provided at the front part of the vehicle body 11.

The work vehicle 10 includes imagers. The imagers of the present embodiment are cameras 35. The cameras 35 are provided, for example, at the front, rear, left, and right of the work vehicle 10, and capture images of the surrounding environment of the work vehicle 10. The cameras 35 are, for example, CCD cameras including CCD image sensors or CMOS cameras including CMOS image sensors. The cameras 35 include a processing circuit that processes signals output from the image sensors, and the processing circuit acquires surrounding image information.

When the work vehicle 10 travels on a road or a farm field, the cameras 35 are used not only for recognizing white lines, signs, displays, or the like, but also for recognizing surrounding obstacles.

The cameras 35 may be either or both of visible cameras that generate visible light images and infrared cameras that generate infrared images. Infrared cameras make it easy to detect an object (obstacle) at night.

Image information acquired by the cameras 35 is transmitted to the controller 70. The image information is used not only for self-driving control but also for manual driving. By using the image information together with other information (sensor data to be described later), the controller 70 can detect obstacles around the work vehicle 10 and cause the work vehicle 10 to travel avoiding the obstacles.

The work vehicle 10 includes a three-dimensional range sensor. The three-dimensional range sensor of the present embodiment is a light detection and ranging (LiDAR) sensor 36. The LiDAR sensor 36 is disposed, for example, at the lower part of the front surface of the vehicle body 11. The LiDAR sensor 36 may be disposed at another position. The LiDAR sensor 36 acquires and outputs sensor data indicating a distance and a direction between measurement points on objects existing in the surroundings and sensor data indicating a two-dimensional or three-dimensional coordinate values of the measurement points on objects existing in the surroundings. The sensor data acquired by the LiDAR sensor 36 is transmitted to the controller 70.

The sensor data from the LiDAR sensor 36 is used to detect surrounding obstacles. By using the sensor data together with other information (the image information), the controller 70 can detect obstacles around the work vehicle 10 and cause the work vehicle 10 to travel avoiding the obstacles.

The cameras 35 and the LiDAR sensor 36 function as obstacle sensors (detection devices) that detect surrounding obstacles.

The sensor data from the LiDAR sensor 36 may be also used for other purposes. The controller 70 can perform an environment map generation processing utilizing an algorithm such as simultaneous localization and mapping (SLAM) based on the sensor data. The environment map generation processing may be performed by a computer (the management server 92 illustrated in FIG. 2) that is, for example, an external management device capable of communicating with the work vehicle 10.

The work vehicle 10 includes a positioning device 37. The positioning device 37 receives satellite signals transmitted from a plurality of GNSS satellites, and performs positioning based on the satellite signals. The GNSS is a general term for satellite positioning systems including a global positioning system (GPS), a quasi-zenith satellite system (QZSS), such as "Michibiki", GLONASS (Russia), Galileo (Europe), and BeiDou (China).

The positioning device 37 includes a receiver 37a that receives satellite signals and a processor (computing processor) 37b. The receiver 37a includes an antenna that receives signals from a GNSS satellite. The processor 37b calculates the position (coordinates) of the work vehicle 10 based on signals received by the antenna. The receiver 37a is disposed above the driver's seat 20, for example. Information indicating the position of the work vehicle 10 is transmitted to the controller 70 and used for self-driving or the like.

The positioning device 37 corrects or complements the position information of the work vehicle 10 based on the satellite signals utilizing the data acquired by the cameras 35 and the LiDAR sensor 36. The position of the work vehicle 10 is identified with a higher accuracy.

The work vehicle 10 includes an inertial measurement device 38. The inertial measurement device 38 includes a triaxial gyro sensor and a three-directional acceleration sensor. The inertial measurement device 38 detects an inclination and an operation of the work vehicle 10. Signals acquired by the inertial measurement device 38 are transmitted to the controller 70. Detection signals from the inertial measurement device 38 are used to complement the position information of the work vehicle 10. Accordingly, the positioning accuracy is improved.

### [Operation Unit (Operation Interface) 31]

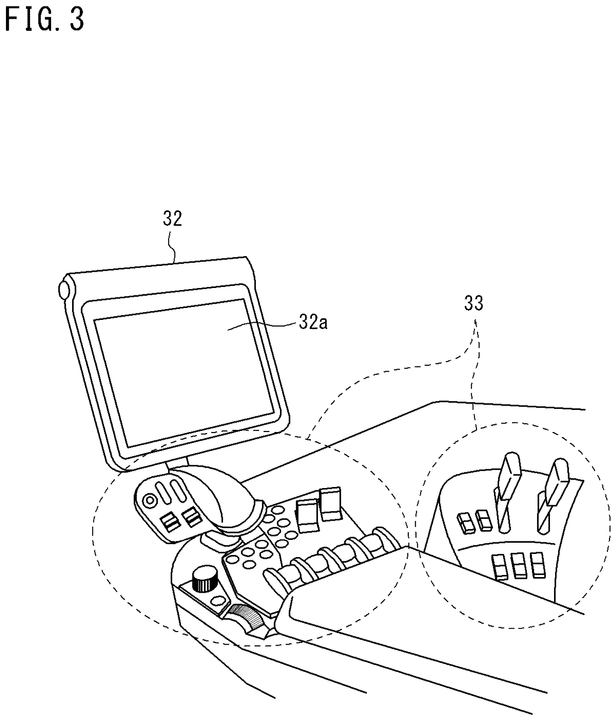

As described above, the work vehicle 10 includes the operation unit 31 including the operation terminal and the operation switch group operated by a driver. FIG. 3 is a perspective view illustrating an example of an operational terminal 32 and an operation switch group 33 installed in front of the driver's seat.

The operation switch group 33 includes a gear position selection switch, a mode switching switch to switch between a self-driving mode and a manual driving mode, a forward/rearward switch for switching between forward travel and rearward travel, a lifting switch for moving up or down the implement 50, and the like.

The operational terminal 32 is a terminal capable of performing an operation related to traveling of the work vehicle 10 and an operation of the implement 50, and is also referred to as a virtual terminal (VT).

The operational terminal 32 of the present embodiment is a tablet terminal device including the display 32a such as a touch panel. The display 32a has a function as a display of liquid crystal or organic light emitting diode.

The work vehicle 10 includes an input device that receives an input operation of a user such as a driver or a manager. The input device is, for example, a keyboard, a mouse, a touch panel, or the like. In the present embodiment, the operational terminal 32 has a function as an input device (input unit).

By operating the operational terminal 32, a user can perform various operations such as switching on/off of a self-driving mode, recording or editing of an environmental map, assisting in generating a travel route, and switching on/off of the implement 50.

The display 32a can display the map information stored in the storage 79, and can display, for example, an area including the current position of the work vehicle 10. In a map based on map information displayed on the display 32a, a position of a user such as a work manager is input. The input position information is transmitted from the operational terminal 32 to the controller 70.

The operational terminal 32 can be formed to be detachable from the work vehicle. In this case, the detached operational terminal 32 communicates with the controller 70 of the work vehicle 10 by, for example, a short-distance communication method.

### [System Configuration of Work Vehicle 10]

FIG. 2 is a block diagram illustrating a system configuration of the work vehicle 10.

The controller 70 includes a control unit (computer) including a processor (computing processing device) and a memory including a RAM, a ROM, and the like. The processor reads a computer program from the memory and executes the computer program to perform the functions of the controller 70. The controller 70 may be configured by one control unit (electronic control unit: ECU) or may be configured by a plurality of control units. In a case where the controller 70 includes a plurality of control units, information communication can be performed between the control units.

In the present embodiment, the controller 70 includes a control unit 71 for speed control, a control unit 72 for steering, a control unit 73 for driving control, and a control unit 74 for route generation processing. The control unit 73 for driving control is hereinafter referred to as a driving control unit 73. The control unit 74 for route generation processing is hereinafter referred to as a route generation unit 74.

The controller 70 includes the storage (storage unit) 79 including a nonvolatile memory or the like that stores various types of information. Various computer programs for causing the control unit to function are stored in the storage 79. The storage 79 stores map information that can be used for self-driving, information on a travel route for self-driving, a database, and the like.

The control unit 71 for speed control provides generated drive signals to the prime mover 12, the transmission 13, and the brake device to perform control such as adjustment of the traveling speed and stop of the work vehicle 10.

The control unit 72 for steering provides generated steering signals to the steering device 15. The control unit 72 controls a hydraulic device or an electric motor included in the assist mechanism of the steering device 15 based on measurement values by a rotation sensor of the steering shaft 25 to control steering of the work vehicle 10.

### [Driving Control Unit 73]

The driving control unit 73 performs overall control related to traveling including self-traveling of the work vehicle 10. The control by the driving control unit 73 may be realized by cooperation of the control unit 71 for speed control and the control unit 72 for steering. The driving control unit 73 can perform control related to each of self-driving, remote driving, and manual driving.

### [Route Generation Unit 74]

The route generation unit 74 performs processing of generating a route on which the work vehicle 10 travels in the work field by self-driving. Therefore, the route generation unit 74 can perform acquisition processing, route generation processing, and position confirmation processing.

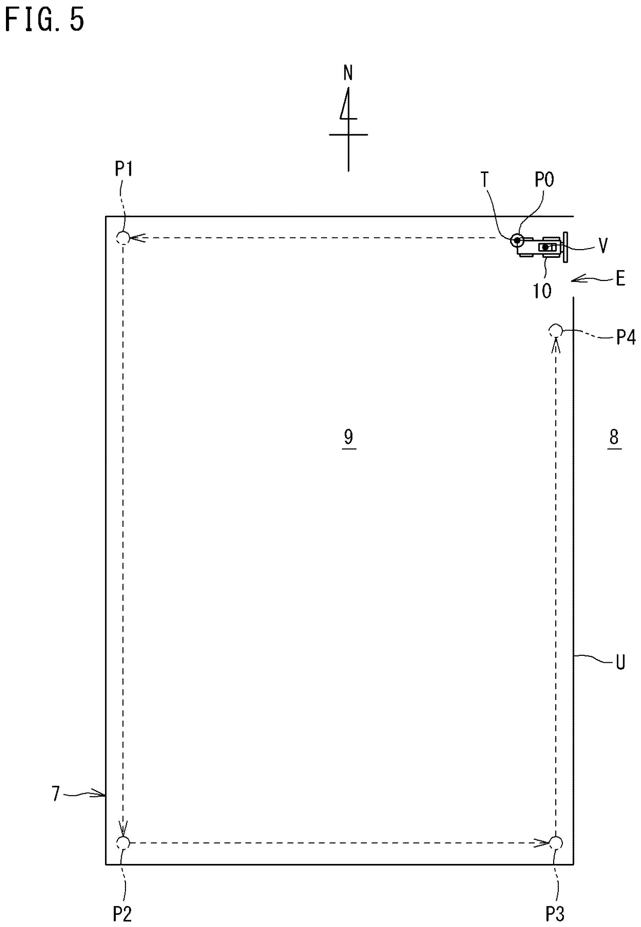

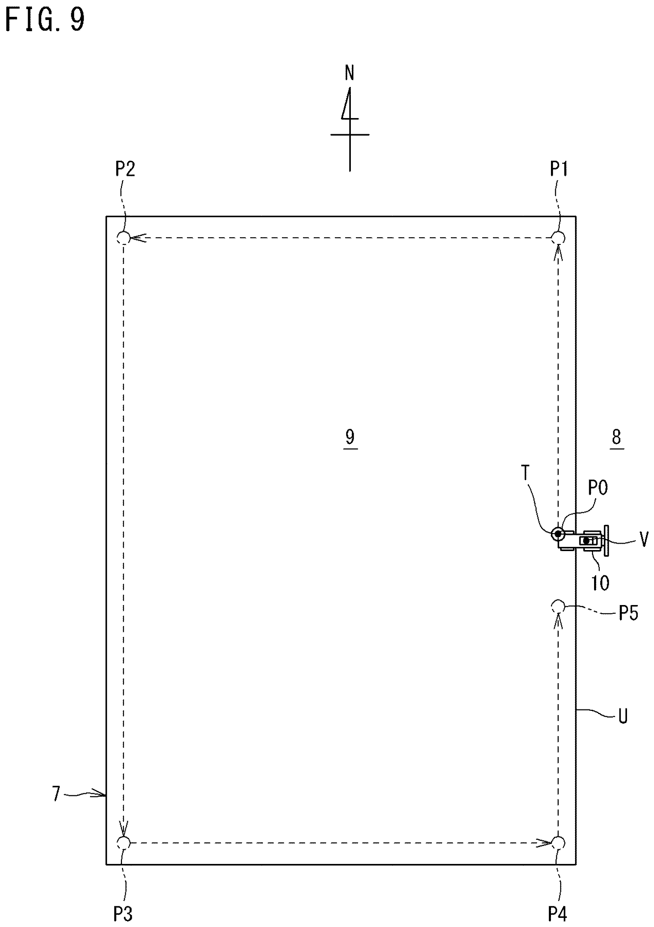

The acquisition processing is processing of acquiring information on the basic shape (hereinafter, referred to as "basic shape information") of a target area 9 in which the work vehicle 10 is to perform work in the work field such as a farm field 7 through a teaching travel to be described later (see FIG. 5 and FIG. 9).

The route generation processing is processing of generating the work route R for the work vehicle 10 to travel and work in the target area 9 by self-driving.

The travel route generated by the route generation unit 74 includes the work route R for the work vehicle 10 to perform work (agricultural work) in a work field such as the farm field 7, and a return route Rb for the work vehicle 10 that has finished the work in the work field to return to, for example, the work start position.

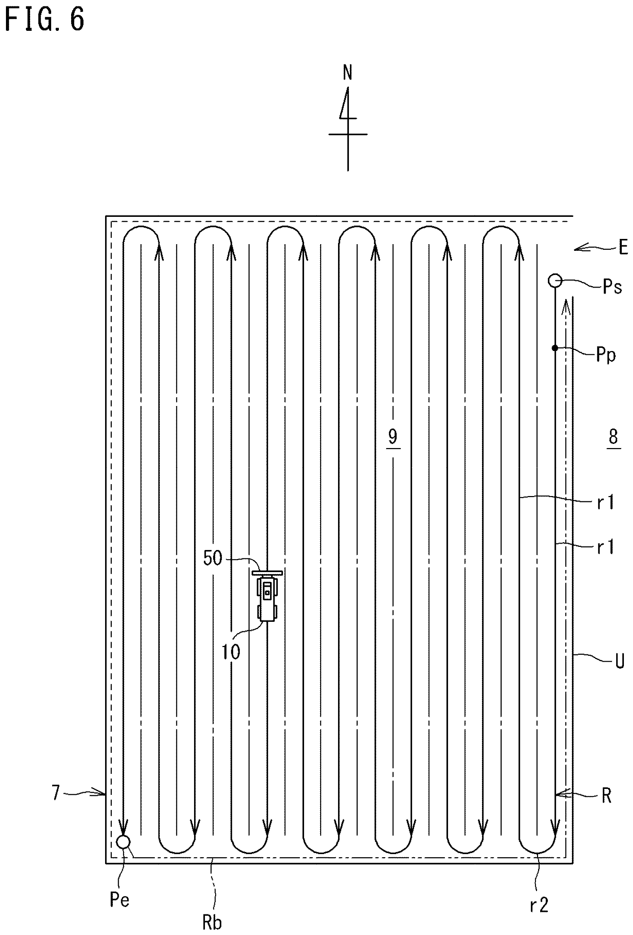

The position confirmation processing is processing of confirming that the work vehicle 10 is at a predetermined place by collating map information of the work field with position information of the work vehicle 10 obtained by GNSS (positioning device 37). As will be described later, the predetermined place is a passing place close to the boundary of the work field and through which the work vehicle 10 passes when moving from the work field toward the road. Specifically, as illustrated in FIG. 6, the passing place is a place connecting the farm field 7 as a work field and a road 8, and is an entrance E through which the work vehicle 10 passes. That is, the passing place is the entrance E between the farm field 7 and the road 8.

Hereinafter, a specific example of each type of processing performed by the route generation unit 74 to generate a route on which the work vehicle 10 travels in the work field by self-driving will be described.

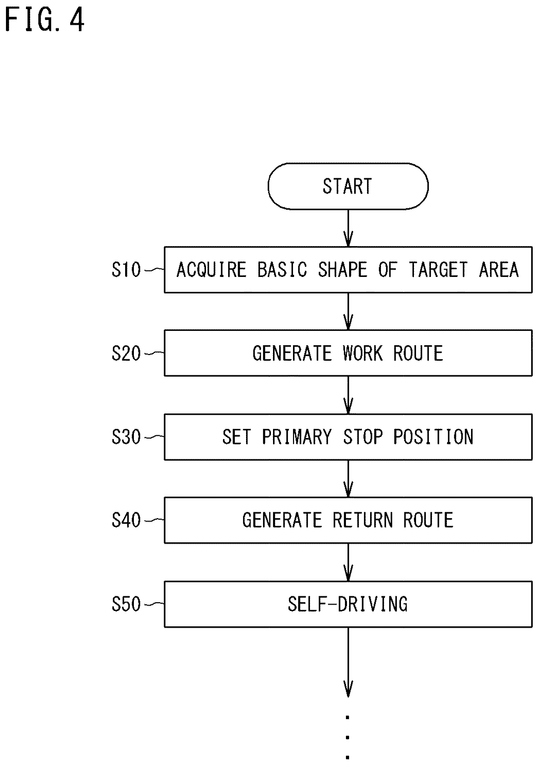

FIG. 4 is a flowchart for describing route generation processing by the route generation unit 74. The route generation processing includes the acquisition processing (acquisition step S10) of acquiring basic shape information and the generation processing (generation step S20) of generating the work route R for the work vehicle 10 to work.

In the case of the example illustrated in FIG. 4, the route generation processing further includes processing of setting a position where the work vehicle 10 is temporarily stopped (step S30) and processing of generating a return route (step S40). Note that steps S30 and S40 can be omitted.

The processing in each step is processing performed by the route generation unit 74 unless otherwise specified.

FIG. 5 is an explanatory diagram illustrating an example of the work field. The work field illustrated in FIG. 5 is a rectangular farm field 7 in plan view. The entrance E serving as a passage through which the work vehicle 10 passes between the farm field 7 and the road 8 adjacent to the farm field 7 is located at the north-east corner. The shape of the farm field 7 and the position of the entrance E may vary.

### <Acquisition Step (Step S10)>

The route generation unit 74 acquires basic shape information. In order to acquire the basic shape information, the operational terminal 32 (see FIG. 3) is used in the present embodiment.

Here, a target point T is defined in advance in the work vehicle 10 (see FIG. 5). The target point T is set at, for example, a front right end, a front left end, a rear right end, and a rear left end of the work vehicle 10. The work vehicle 10 has a plurality of target points, but only one target point T is effective and can be selected by an input operation on the operational terminal 32.

The work vehicle 10 can acquire the position (coordinates) of the work vehicle 10 itself by the positioning device 37. The position of the work vehicle 10 itself is coordinates of a reference point V of the work vehicle 10. In the work vehicle 10, the positional relationship between the target point T and the reference point V is known. Therefore, the coordinates of the target point T can be calculated from the reference point V.

When arriving at the target farm field 7 through the road 8, the work vehicle 10 performs teaching travel to be described next in order to obtain the shape (the basic shape information) of the target area 9 where the work vehicle can work in the farm field 7.

The driver steers the work vehicle 10 by manual driving to match the effective target point T with a position close to the entrance E. In this state, the driver presses a registration button on the operational terminal 32 as a point registration operation. As a result, a position close to the entrance E is registered as a start point P0.

The driver advances the work vehicle 10 to match the target point T with the north-west end which is the shape feature point (the vertex of the rectangle in the illustrated example) of the farm field 7. In this state, the point registration operation is performed on the operational terminal 32. The north-west end is registered as a first passing point P1.

The driver advances the work vehicle 10 to match the target point T with the south-west end, which is the next shape feature point. In this state, the point registration operation is performed on the operational terminal 32. The south-west end is registered as a second passing point P2.

The driver advances the work vehicle 10 to match the target point T with the south-east end, which is the next shape feature point.

In this state, the point registration operation is performed on the operational terminal 32. The south-east end is registered as a third passing point P3.

The driver advances the work vehicle 10 along a ridge (boundary with the road 8) U on the east side of the farm field 7. The target point is matched with another position close to the entrance E. The point registration operation is performed on the operational terminal 32. This position is close to the start position of the teaching travel. Therefore, the route generation unit 74 registers the other position close to the entrance E as an end point P4. Alternatively, the driver may perform an instruction operation indicating the end point of the teaching travel on the operational terminal 32 together with the registration operation, whereby the position may be registered as the end point.

The route generation unit 74 calculates position coordinates of each of the start point P0, the passing points P1, P2, and P3, and the end point P4 based on information of the position (coordinates) of the vehicle itself obtained by the positioning device 37. A range obtained by connecting these points is the target area 9 where the work vehicle 10 can work, and the basic shape thereof is obtained. The route generation unit 74 acquires information including these points (coordinates) as the basic shape information.

In the above-described embodiment, each of the start point P0, the passing points P1, P2, P3, and the end point P4 is registered by the operation on the operational terminal 32, but the basic shape that is the outline of the farm field 7 may be automatically acquired from information (coordinates) of a plurality of positions of the work vehicle 10 itself when the work vehicle 10 travels along the outer periphery of the farm field 7. In this case, even without registering each of the start point P0, the passing points P1, P2, P3, and the end point P4, the inflection point of the line connecting the information (coordinates) of the plurality of positions of the work vehicle 10 itself is automatically registered as a point located at the corners of the farm field 7 (start point P0, passing points P1, P2, P3, and end point P4).

The operation described above is the teaching travel.

Once the basic shape information is obtained, the route generation unit 74 proceeds to next step 20.

### <Generation Step (Step S20)>

FIG. 6 is an explanatory diagram illustrating an example of the generated work route R.

An interval between one-dot chain lines in FIG. 6 represents a working breadth of the implement 50. The working breadth is set in advance and stored in the storage 79. The working breadth is input to the controller 70 by an operation by a user on the operational terminal 32. The working breadth may be automatically recognized when the implement 50 is connected to the work vehicle 10 and input to the controller 70.

In the present embodiment, the shape (linear shape) of the work route R including the plurality main routes r1 that are parallel and the turning routes r2 each connecting two of the main routes r1 is generated. The interval between the adjacent main routes r1 is set in accordance with the working breadth.

At this time, the work route R is generated with a position close to the entrance E as a starting point. That is, in the range of the target area 9, one of the main routes r1 starting from a position close to the entrance E is determined, and then the remaining main routes r1 and the turning routes r2 are determined. The starting point that is close to the entrance E is the work start point Ps of the work route R.

The main routes r1 and the turning routes r2 are determined based on the basic shape information. The shape (linear shape) of the work route R including the plurality of main routes r1 is generated so as to pass through (cover) the entire target area 9. In the example illustrated in FIG. 6, the direction of the main routes r1 is the north-south direction, but may be the east-west direction. Note that the target area 9 is an area where agricultural work is performed and is an area set inside the farm field 7, and can be set by an operation on the operational terminal 32.

An algorithm for creating such a route is set by the route generation unit 74. Although the main routes r1 illustrated in FIG. 6 are linear, the main routes r1 may include a curved portion.

The route generation unit 74 sets the work start point Ps and the work end point Pe of the work route R in accordance with the processing of generating the shape of the work route R. The work start point Ps is a point where the work vehicle 10 traveling along the work route R starts work. The work end point Pe is a point where the work vehicle 10 traveling along the work route R ends the work.

The route generation unit 74 sets the work start point Ps closer to the passing place to the farm field 7 than the work end point Pe. The passing place is a place close to the boundary of the farm field 7 with the road 8 and through which the work vehicle 10 passes when moving from the farm field 7 toward the road 8.

In the present embodiment, map information of the farm field 7 is stored in the storage 79. The route generation unit 74 refers to the map information and the basic shape information. According to the map information, the entrance E exists between the farm field 7 and the road 8 as the passing place.

The route generation unit 74 can confirm that the target area 9 indicated by the basic shape information includes the entrance E that connects the farm field 7 and the road 8 and through which the work vehicle 10 passes. Therefore, the route generation unit 74 can set the work start point Ps at a position closer to the entrance E than the work end point Pe.

As described above, the work route R having the work start point Ps close to the entrance E is generated. The generated work route R is stored in the storage 79 and displayed on the display 32a of the operational terminal 32.

When the work vehicle 10 actually travels and works by self-driving in the work field such as the farm field 7, the work manager is often close to the passing place (entrance E). In the present embodiment, as described above, the work start point Ps of the work route R is set close to the passing place (entrance E). Therefore, when the self-driving by the work vehicle 10 is started from the work start point Ps based on the generated work route R, the manager can visually confirm the content of the work started by the work vehicle 10 easily.

In the present embodiment, one of the main routes r1 is set to extend from the work start point Ps along the ridge (boundary with road 8) U of farm field 7. As a result, the manager can confirm the content of the work while moving along the road 8.

If the manager determines that the content of the work is insufficient, the manager can quickly take action such as redoing the work. When the work content is insufficient, the implement 50 is adjusted, and the self-driving is performed again.

In the present embodiment, the work route R causing the work vehicle to travel in the first direction on one of the main routes r1 and then on the main route r1 next to the main route r1 in a second direction opposite to the first direction is generated. Therefore, as illustrated in FIG. 6, the work end point Pe is set at a position away from the work start point Ps in the target area 9. In particular, the basic shape of the target area 9 is rectangular. Therefore, the work end point Pe is set at a position diagonally opposite the work start point Ps.

### <Step S30>

When the work route R having the work start point Ps close to the entrance E is generated, the route generation unit 74 performs the processing of step S30 illustrated in FIG. 4. The processing of step S30 is processing of setting a position on the work route R to which the work vehicle 10 travels a short distance from the work start point Ps as the primary stop position. In FIG. 6, the primary stop position is indicated as "Pp".

The short distance can be, for example, a distance of 10% of the main route r1 starting from the work start point Ps, or a constant value such as 10 meters. Note that the short distance is changeable, and is changed, for example, according to the work content performed by the implement 50.

With the primary stop position Pp set on the work route R, the work vehicle 10 starts traveling from the work start point Ps and travels a short distance, and then the work vehicle stops primarily. The manager can visually confirm the content of the work having been performed by the work vehicle 10 (implement 50) during travelling the short distance.

### <Step S40>

The work route R generated in step S20 is an inner work route including the main routes r1 and the turning routes r2. The work route R is a route for the work vehicle 10 (implement 50) to perform work such as tilling on the target area 9.

In addition to the work route R as described, the route generation unit 74 generates the return route Rb for the work vehicle 10 to travel along the outer peripheral area of the target area 9 (step S40). In FIG. 6, the return route Rb is indicated by a two-dot chain line.

The return route Rb is a route for causing the work vehicle 10 to travel from the work end point Pe to a position close to the passing place (entrance E). The return route Rb includes a route for causing the work vehicle 10 to travel along the ridge of the farm field 7, which is a work field, from the work end point Pe.

In the return route Rb, the work vehicle 10 traveling by self-driving may be in a state in which the implement 50 does not perform work or may be in a state in which the implement 50 performs work. The state in which the implement 50 does not perform work is, for example, a state in which the implement 50 is moved up so that the implement 50 does not come into contact with the ground.

### <Second Example of Generation of Work Route R>

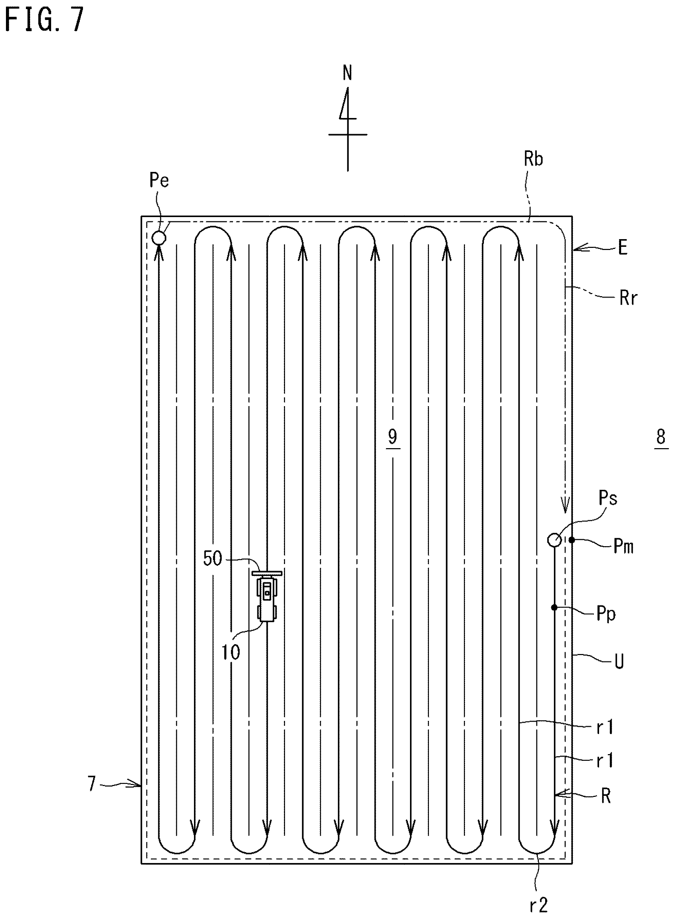

In the case of the example (first example) illustrated in FIG. 4, FIG. 5, and FIG. 6, the entrance E is set in the work field. In some work fields, the entrance may not be clearly set. FIG. 7 is an explanatory diagram illustrating an example of the work route R generated in the case where an entrance is not set in a work field (farm field 7), as a second example. The generation of the work route R will be described below as the second example.

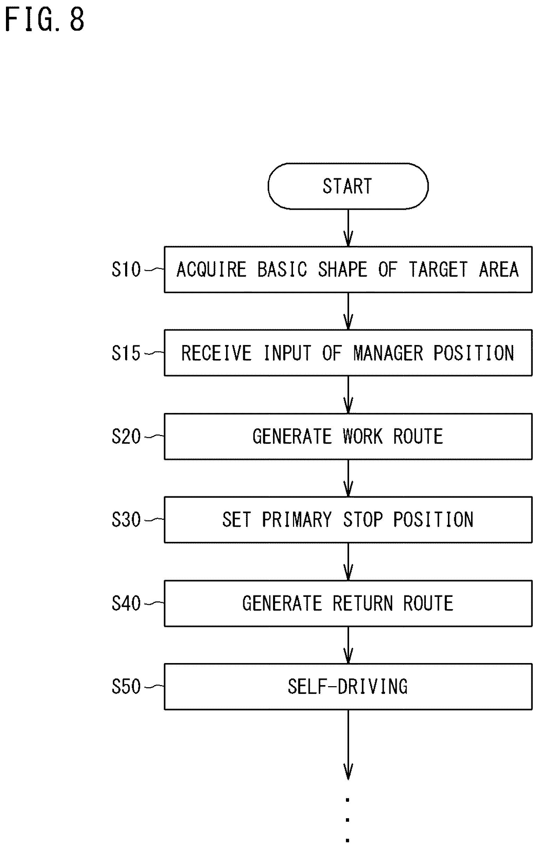

FIG. 8 is a flowchart for describing route generation processing in the case of the second example. Step S10 is a step in which the route generation unit 74 acquires basic shape information (acquisition step). This is processing accompanied by the teaching travel illustrated in FIG. 9, and is the same as step S10 of the first example illustrated in FIG. 4.

However, in the case of the first example illustrated in FIG. 5, a position close to the entrance E is registered as the start point P0.

On the other hand, in the case of the second example illustrated in FIG. 9, the work vehicle 10 enters the farm field 7 from the road 8 through an arbitrary place. A position close to the entry position is registered as the start point P0. The start point P0 is a position in the middle of the ridge U. Even if the shape of the farm field 7 is the same rectangle as that in the first example (FIG. 5), as illustrated in FIG. 9, the passing points are more than those in the first example (the passing points are P1 to P4).

Step S15 illustrated in FIG. 8 is an input receiving step. Information indicating the work manager position in the farm field 7 or the target area 9 is input to the controller 70. Note that step S15 may be performed before step S10 or may be performed in the middle of step S10.

In the present embodiment, the manager position is input by the manager through the operational terminal 32. For example, a map of the farm field 7 where the work vehicle 10 performs work is displayed on the display 32a of the operational terminal 32 (see FIG. 3). The manager performs an input operation on the map to input the manager position. The information is stored in the storage 79. In FIG. 7, the manager position is indicated by a reference sign "Pm".

When the basic shape information is acquired in step S10 and the manager position is input to the controller 70 in step S15, the route generation unit 74 proceeds to the next generation step (step 20 in FIG. 8).

In step S20, similarly to the case of the first example, the shape (linear shape) of the work route R is generated, and the work start point Ps and the work end point Pe of the work route R are set.

The algorithm for generating the shape (linear) of the work route R is the same as that in the first example illustrated in FIG. 6. However, in the case of the second example, as illustrated in FIG. 7, the work route R is formed with a position close to the manager position Pm as a starting point. The information on the manager position Pm has already been acquired in step S15. That is, one of the main routes r1 starting from a position close to the manager position Pm is determined, and then the remaining main routes r1 and the turning routes r2 are determined. The starting point that is close to the manager position Pm is the work start point Ps of the work route R.

The route generation unit 74 sets the work start point Ps and the work end point Pe of the work route R in accordance with the processing of generating the shape of the work route R. The route generation unit 74 sets the work start point Ps closer to manager position Pm than the work end point Pe.

As described above, the work route R having the work start point Ps close to the manager position Pm is generated. The generated work route R is stored in the storage 79 and displayed on the display 32a of the operational terminal 32.

When the self-driving by the work vehicle 10 is started from the work start point Ps based on the work route R generated as described above, the manager can visually confirm the content of the work started by the work vehicle 10 easily.

In the present embodiment, one of the main routes r1 is set to extend from the work start point Ps along the ridge (boundary with road 8) U of farm field 7. As a result, the manager can confirm the content of the work while moving along the road 8.

If the manager determines that the content of the work is insufficient, the manager can quickly take action such as redoing the work. When the work content is insufficient, the implement 50 is adjusted, and the self-driving is performed again.

Also in the second example illustrated in FIG. 8, similarly to the first example illustrated in FIG. 4, steps S30 and S40 are performed. In step S40, the route generation unit 74 generates the return route Rb. In FIG. 7, the return route Rb is indicated by a two-dot chain line. The return route Rb is a route for causing the work vehicle 10 to travel from the work end point Pe to a position close to the manager position Pm. The information on the manager position Pm has already been acquired in step S15. The return route Rb includes a route for causing the work vehicle 10 to travel along the ridge of the farm field 7, which is a work field, from the work end point Pe.

In the return route Rb, the work vehicle 10 traveling by self-driving may be in a state in which the implement 50 does not perform work or may be in a state in which the implement 50 performs work. However, in a case where some work remains in the target area 9 by work only on the work route R, the work vehicle 10 may travel on a remaining route Rr of the work in the return route Rb while performing the work.

### <Generation Timing of Work Route R>

In each of the first example and the second example described above, the work route R may be generated before the work vehicle 10 arrives at the farm field 7.

In the case of the first example, when the work vehicle 10 generates the work route R, the route generation unit 74 collates the map information of the farm field 7 with the position information of the work vehicle 10 (the position of the work vehicle 10 itself) obtained by the positioning device 37. As a result, the route generation unit 74 confirms that the work vehicle 10 is at a predetermined place (position confirmation processing). The predetermined place is an area of the entrance E.

Upon confirming that the work vehicle 10 is in the area of the entrance E, the route generation unit 74 starts the processing from step S10 as processing of generating a route for traveling in the work field (farm field 7) by self-driving (see FIG. 4).

The "area of the entrance E" does not have to be strictly the position of the entrance E, and includes a position close to the entrance E. When the work vehicle 10 arrives at a position close to the entrance E, generation of the work route R having a position close to the entrance E set as the work start point Ps is started.

### <Route Generation Unit 74>

As described above, as illustrated in FIG. 5 and FIG. 9, the route generation unit 74 has a function as an acquisition processor that acquires information on the basic shape (basic shape information) of the target area 9 in which the work vehicle 10 is to perform work in the work field (farm field 7).

As illustrated in FIG. 6 and FIG. 7, the route generation unit 74 has a function as a generation processor that generates a work route R for the work vehicle 10 to travel and work in the target area 9 by self-driving.

The route generation unit 74 has a function as a position confirmation unit that confirms that the work vehicle 10 is in the area of the entrance E by collating the map information of the work field (farm field 9) with the position information of the work vehicle 10 obtained by the GNSS.

The acquisition processor, the generation processor, and the position confirmation unit may be implemented by different control units.

### [Self-Driving of Work Vehicle 10]

Self-traveling performed by the work vehicle 10 based on the travel route (work route R) generated as described above will be described.

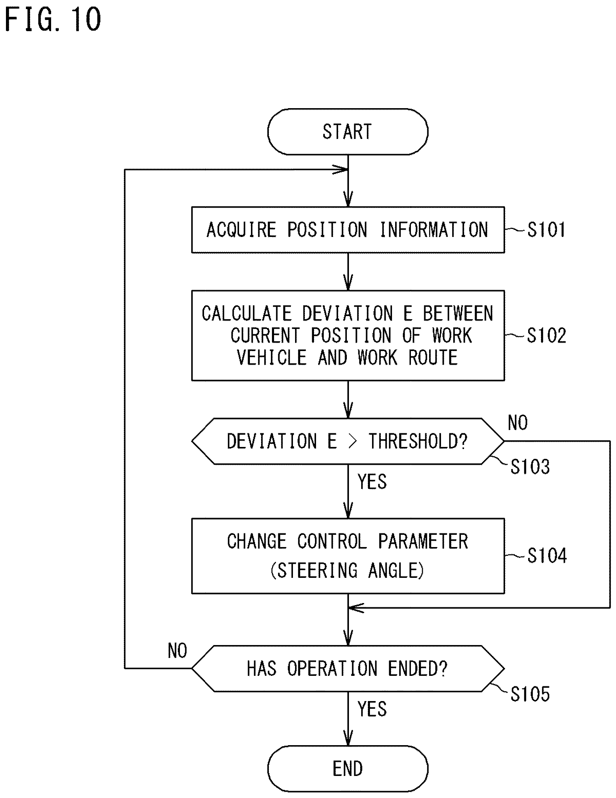

As illustrated in FIG. 6 and FIG. 7, the work vehicle 10 automatically travels from the work start point Ps to the work end point Pe along the work route R. FIG. 10 is a flowchart illustrating an example of control for self-driving.

The driving control unit 73 performs self-steering by performing the processing of steps S101 to S105 illustrated in FIG. 10 while the work vehicle 10 travels. The traveling speed of the work vehicle 10 is maintained at a preset value, but may be automatically changed during the travel.

The driving control unit 73 acquires position information of the work vehicle 10 acquired by the positioning device 37 during the travel of the work vehicle 10 (step S101). The position information is information indicating the current position of the work vehicle 10. The driving control unit 73 calculates a deviation E between the current position of the work vehicle 10 and the work route R (step S102).

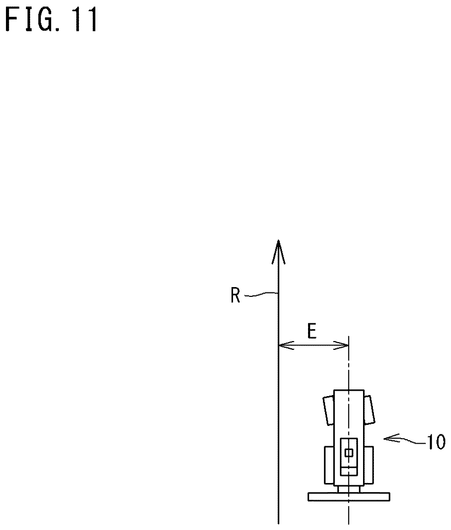

FIG. 11 is an explanatory diagram of the work vehicle 10 traveling by self-driving. The deviation E is a difference between the current position of the work vehicle 10 and the work route R, and is, for example, a distance. The driving control unit 73 determines whether the deviation E exceeds the threshold (step S103 in FIG. 10).

When the deviation E exceeds the threshold ("Yes" in step S103), the driving control unit 73 outputs a command signal to the control unit 72 for steering in order to reduce the deviation E. Upon receiving the command signal, the control unit 72 for steering changes a control parameter provided to the steering device 15 to change the steering angle (step S104). The steering angle is changed until the deviation E becomes equal to or less than the threshold.

In step S103, when the deviation E is equal to or less than the threshold, step S104 is skipped.

In the present embodiment (see FIG. 11), the steering device 15 is controlled based on the deviation E between the current position of the work vehicle 10 and the work route R. However, the steering device may be controlled based on a deviation in azimuth in addition to the deviation E. For example, the driving control unit 73 determines whether an angle difference between the direction of the work vehicle 10 identified by one or both of the positioning device 37 and the inertial measurement device 38 and the direction of the work route R exceeds a preset threshold. The angle difference is the deviation in azimuth. When the angle difference exceeds the threshold, a control parameter (for example, a steering angle) of the steering device 15 is changed according to the deviation.

Step S105 in FIG. 10 is a step of determining whether the driving control unit 73 has received an operation end command. The operation end command is issued, for example, in the following cases.
1) Stop of self-driving is instructed by a manager (user) by, for example, a remote operation.
2) The work vehicle 10 reaches the destination.

In the example illustrated in FIG. 6 or 7, when the work vehicle 10 reaches the work end point Pe, which is the destination, the driving control unit 73 receives an operation end command signal.

When the driving control unit 73 does not receive an operation end command ("No" in step S105), the processing returns to step S101 and similar processing is performed thereafter. The driving control unit 73 repeats the operations of steps S101 to S105 until receiving the operation end command.

### [Others]

The route generation device 80 may be used not only for the work vehicle 10 that is an agricultural machine but also for other devices. For example, a management device owned by a business operator who operates a management system for agricultural work may include the route generation device 80. The management device is a server computer and is referred to as the management server 92 (see FIG. 2). The business operator is, for example, an agricultural machine manufacturer or an information-related company.

The management server 92 can wirelessly communicate with the work vehicle 10 through a network 91. The management server 92 centrally manages data related to agricultural machines, and supports the agricultural work using the data. For example, using information received from the work vehicle 10, the management server 92 can create a self-driving plan to be performed by an agricultural machine that is the work vehicle 10, another work vehicle, or the like.

When the management server 92 (see FIG. 2) includes the route generation device 80, the teaching travel for the acquisition step (step S10 in FIG. 4 and FIG. 8) is performed by the work vehicle 10. Information obtained by the teaching travel is transmitted from the work vehicle 10 to the management server 92. As a result, the management server 92 acquires the basic shape information. The management server 92 performs the generation processing (step S20 in FIG. 4 and FIG. 8) of generating a work route R for the work vehicle 10 to work. The management server 92 may further perform step S30 and step S40.

The work vehicle 10 acquires information of the generated travel route (work route R) from the management server 92 via the communication device 16. The work vehicle 10 performs self-driving using the received information.

The route generation device 80 and the device for controlling self-driving in the embodiment described above can be attached to an agricultural machine not having these functions afterward. Such devices may be manufactured and marketed independently of the agricultural machine.

Computer programs for use in such devices may also be manufactured and sold independently of the agricultural machine. The computer programs may be provided in a form stored in, for example, a computer-readable storage medium. The computer programs may be provided through downloading via telecommunication lines (for example, the Internet).

The embodiment described above is merely an example in all respects and the invention is not limited to the embodiment. The scope of the present invention is defined by the claims rather than the embodiment, and includes all modifications within the scope equivalent to the configurations defined in the claims.

### REFERENCE SIGNS LIST

- 7: farm field (work field)
- 9: target area
- 10: work vehicle
- 32: operation terminal (input unit)
- 80: route generation device
- E: entrance
- Ps: work start point
- Pe: work end point
- Pm: manager position
- Pp: primary stop position
- R: work route
- Rb: return route

## Claims

1. A route generation device that generates a route on which a work vehicle travels in a work field by self-driving, comprising:
an acquisition processor configured to acquire information on a basic shape of a target area in which the work vehicle is to perform work in the work field; and
a generation processor configured to generate a work route on which the work vehicle travels and works in the target area by self-driving, wherein
the generation processor sets a work start point of the work route closer to a passing place that is close to a boundary of the work field and through which the work vehicle passes when moving from the work field toward a road than a work end point of the work route.

2. The route generation device according to claim 1, wherein
in a case where the target area acquired by the acquisition processor includes an entrance that connects the work field and the road and through which the work vehicle passes, the generation processor sets the work start point of the work route at a position close to the entrance.

3. A route generation device that generates a route on which a work vehicle travels in a work field by self-driving, comprising:
an acquisition processor configured to acquire information on a basic shape of a target area in which the work vehicle is to perform work in the work field;
an input unit to which information indicating a manager position of work is input; and
a generation processor configured to generate a work route on which the work vehicle travels and works in the target area by self-driving, wherein
the generation processor sets a work start point of the work route closer to the manager position than a work end point of the work route.

4. The route generation device according to any one of claims 1 to 3, wherein
the generation processor sets the work end point of the work route for the work vehicle to work at a position away from the work start point of the target area.

5. The route generation device according to claim 1, further comprising
a position confirmation unit configured to confirm that the work vehicle is at the passing place by collating map information of the work field with position information of the work vehicle obtained by a GNSS, wherein
when it is confirmed that the work vehicle is at the passing place, processing of generating a route on which the work vehicle travels in the work field by self-driving is started.

6. The route generation device according to any one of claims 1 to 3, wherein
the generation processor sets, as a primary stop position, a position on the work route to which the work vehicle travels a short distance from the work start point.

7. The route generation device according to claim 1 or 2, wherein
the generation processor generates a return route including a route for causing the work vehicle to travel from the work end point to a position close to the passing place, the route being for causing the work vehicle to travel along a ridge of the work field from the work end point.

8. A computer program for causing a computer to operate as a device for generating a route on which a work vehicle travels in a work field by self-driving, the computer program causing the computer to:
acquire information on a basic shape of a target area in which the work vehicle is to perform work in the work field; and
generate a work route on which the work vehicle travels and works in the target area by self-driving, wherein
in the generating, a work start point of the work route is set closer to a passing place that is close to a boundary of the work field and through which the work vehicle passes when moving from the work field toward a road than a work end point of the work route.

9. A computer program for causing a computer to operate as a device for generating a route on which a work vehicle travels in a work field by self-driving, the computer program causing the computer to:
acquire information on a basic shape of a target area in which the work vehicle is to perform work in the work field;
receive information indicating a manager position of work as input; and
generate a work route on which the work vehicle travels and works in the target area by self-driving, wherein
in the generating, a work start point of the work route is set closer to the manager position than a work end point of the work route.
